# EUROPEAN PATENT SPECIFICATION

(11) **EP 3 041 099 B1**
(45) Date of publication and mention of the grant of the patent: **22.05.2019**
(21) Application number: 15192883.5
(22) Date of filing: 04.11.2015
(51) Int. Cl.: H02G 3/10, H02G 3/14

(54) **DEVICE FOR MOUNTING AN ELECTRONIC CONTROL SCREEN ON A WALL**
VORRICHTUNG ZUR MONTAGE EINES ELEKTRONISCHEN STEUERBILDSCHIRMS AN EINER WAND
DISPOSITIF DE MONTAGE D'UN ÉCRAN À COMMANDE ÉLECTRONIQUE SUR UNE PAROI

(30) Priority: 30.12.2014 ES 201431693 U
(43) Date of publication of application: 06.07.2016
(73) Proprietor: Caspro, S.A., 08759 Vallirana - Barcelona (ES)
(72) Inventor: TRES CASAS, Daniel, 08759 VALLIRANA (Barcelona) (ES)
(74) Representative: Ungria López, Javier

(56) References cited:
- EP-A1- 2 568 488
- GB-A- 2 399 697
- US-A1- 2013 342 313
- US-B1- 7 432 444

## Description

### OBJECT OF THE INVENTION

The present invention refers to a device for mounting an electronic control screen on a wall, which allows the electronic component to be mounted carrying out only two movements: firstly a horizontal movement to position the component and make contact with the device, and secondly a vertical movement to secure it and create an airtight seal in order to prevent humidity from seeping inside the device, especially to the area where the electrical conductors of the electronic component are located.

### TECHNICAL PROBLEM TO ADDRESS AND BACKGROUND OF THE INVENTION

When electronic components are used in humid environments, their connections need to be isolated. For the devices commonly known in the state of the art this usually requires complex assembly systems and specific tools, and in practice every individual case increases the costs of mounting the device.

Specially when this specific type of device needs to be mounted on walls, more specifically the devices to control showers, hydro massages or any other component used in the conditions of a water zone, they require specific tools to make an airtight seal between the screen and the electrical connections in order to be able to withstand the levels of humidity, given the frequent use and humidity conditions of these type of facilities.

Therefore, it is necessary to find a solution that makes it easier to place these devices with an airtight seal avoiding the use of complex tools and the costs that might deter most people from installing this type of device.

Applicant is aware of document US 2013/0342313 A1 which discloses a device for mounting on a wall an electronic control screen equipped with a perimeter relief, where the device comprises a box placed in a hole in the wall and a flat plate secured to the box, such that the box comprises at least two housings to secure the flat plate using fixing means.

Applicant is also aware of document US 7 432 444 B1 which discloses a temporary protective cover with a protruding pin mounted in a keyhole shaped hole through the cover and when a wallboard in mounted over an outlet box the protruding pin indicates the location of the box so a tool can be used to cut away wallboard covering the box while preventing wires inside the box from being cut.

### DESCRIPTION OF THE INVENTION

The invention described discloses a device for mounting an electronic control screen on a wall, which comprises a box placed in a hole in the wall and a flat plate secured to the box, which rests on a surface of a tile or on the lining of the wall.

The box of the device for mounting an electronic control screen on a wall that is the object of the invention comprises at least two housings to secure the flat plate using fixing means, and the flat plate comprises at least two keyhole slot fixings that have a wide part and a narrow part, where at least two lugs of the electronic control screen are introduced.

The flat plate of the device for mounting an electronic control screen on a wall comprises at least two protrusions on the inside of said flat plate, which correspond to each of the keyhole slot fixings. The protrusions configure a slanted inner surface that guides the head of each lug introduced in the keyhole slot fixing when said lug is moved along the keyhole slot fixing.

The flat plate of the device that is the object of the invention comprises some fittings in the narrow area of the keyhole slot fixings that provide the elasticity they need to insert and retain the lugs by means of a snap connection to said keyhole slot fixings.

The electronic control screen comprises a perimeter relief that provides the space needed to house the flat plate inside the electronic control screen to the device.

In addition, the electronic control screen of the device that is the object of the invention comprises a perimeter rubber that creates an airtight seal between the electronic control screen and the wall.

The depth at which the lugs of the electronic control screen are placed can be regulated in relation to the electronic control screen in order to carry out the vertical movement over the inner surface of the protrusions, so that said vertical movement and the shape of the inner surface of the protrusions adjusts the electronic control screen against the surface of the tile or the lining of the wall.

This fitting works together with the perimeter rubber to ensure that the seal between the electronic control screen and the surface of the tile or the lining of the wall is completely airtight.

### DESCRIPTION OF THE FIGURES

To complete the description and in order to give a better understanding of the characteristics of the invention, this descriptive report is accompanied by a series of drawings that are an integral part of the report, wherein, for illustration purposes and without limitation, the following has been represented:

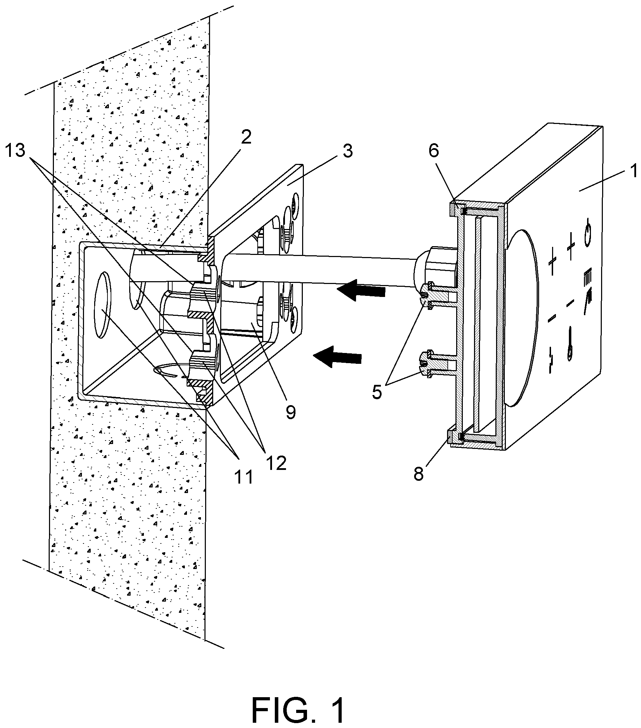

Figure 1 is a perspective view of the device that is the object of the invention with the flat plate on the box and the electronic control screen set apart, and a series of arrows showing the first movement that needs to be carried out in order to place the electronic control screen.

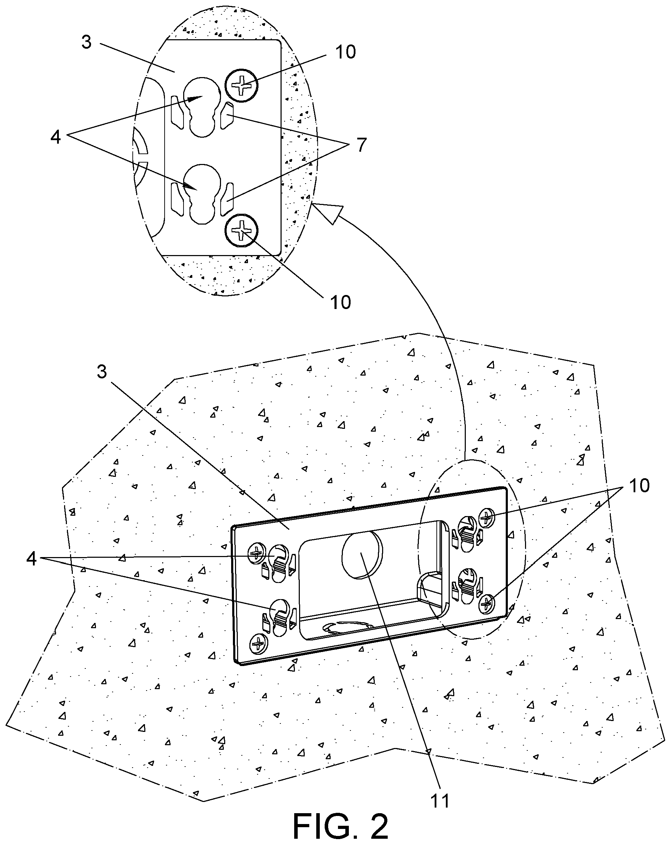

Figure 2 is a perspective view of the device that is the object of the invention without the electronic control screen, with a detailed front view of a part.

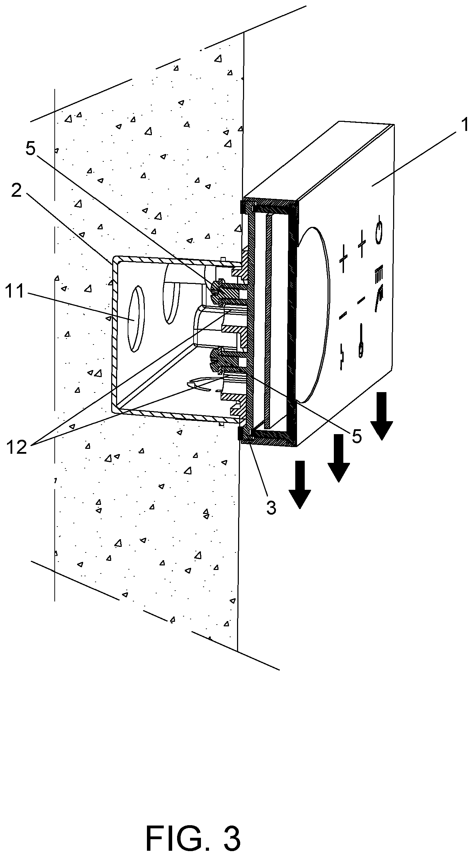

Figure 3 shows a perspective view similar to Figure 1 but with a series of arrows showing the vertical movement that needs to be carried out in order to secure the electronic control screen to the device.

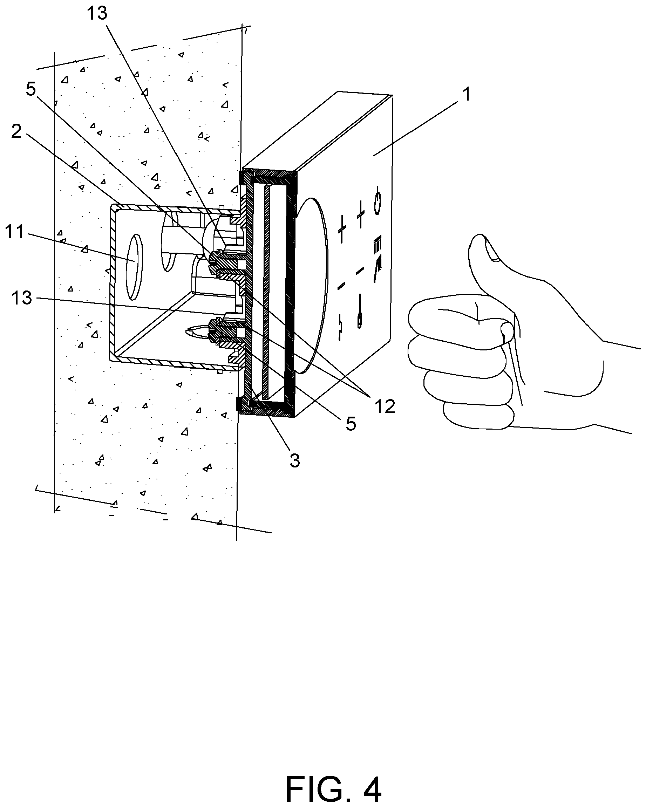

Figure 4 shows a cross-section perspective view of the electronic control screen placed on a wall using the device that is the object of the invention.

The different numerical references featured in the figures correspond to the following elements:
1.- electronic control screen,
2.- box,
3.- flat plate,
4.- keyhole slot fixings,
5.- lugs,
6.- perimeter relief,
7.- fittings,
8.- perimeter rubber,
9.- housing,
10.- fixing means,
11.- through hole,
12.- protrusion, and
13.- slanted inner surface.

### PREFERRED EMBODIMENT OF THE INVENTION

As explained above and as shown in the drawings, the object of the invention is a device for mounting an electronic control screen (1) on a wall, which does not require any specific tools and makes it easy to mount and dismount this type of electronic control screens (1).

The device that is the object of the invention comprises a box (2) inserted in a hole made in the wall and a flat plate (3) that is attached to the box (2) using fixing means (10), which in the preferred embodiment of the invention are made up by four screws placed on four housings (9) for screws located on the four corners of the box (2).

The box (2) comprises two through holes (11) in its interior to allow the electrical connections to reach the electronic control screen (1).

In addition, the flat plate (3) comprises four keyhole slot fixings (4) that have a wide and a narrow part, where a series of lugs (5) of the electronic control screen (1) are introduced. Said lugs (5) are introduced in the wider part and slide down to the narrow part so that the electronic control screen (1) is secured to the flat plate (3) by means of a snap connection.

In order to aid said snap connection, the flat plate (3) comprises a series of fittings (7) located on the narrow part of the keyhole slot fixings, which give the keyhole slot fixings the elasticity needed to carry out the aforementioned snap connection, and allow them to secure the electronic control screen (1) to the flat plate (3).

Using the keyhole slot fixings (4) of the flat plate (3) and the lugs (5) of the electronic control screen (1), it is possible to mount and dismount said electronic control screen (1) by carrying out two movements with the electronic control screen (1): firstly a horizontal movement to position the component and make contact with the device, and secondly a vertical movement to secure it, so that the process of mounting the electronic control screen (1) is easier and more simple.

The electronic control screen (1) comprises a perimeter relief (6) and a perimeter rubber (8) so that the perimeter relief (9) aids the flat plate (3) to fit on the inside of the electronic control screen (1) in the area where it touches the wall, and the perimeter rubber (8) creates an airtight seal between the electronic control screen (1) and the wall.

In order to ensure that the seal between the electronic control screen (1) and the wall is airtight, the flat plate (3) comprises a series of protrusions (12) placed perpendicular to the flat plate (3) on the inside of the keyhole slot fixings (4). Said protrusions (12) are located on the inside of the flat plate (3) and comprise a slanted inner surface (13) shaped like a ramp so that the area of the protrusion (12) that corresponds to the wide area of the keyhole slot fixing (4) is smaller than the area of the protrusion (12) that corresponds to the narrow area of the keyhole slot fixing (4).

By means of the configuration of the protrusion (12), with a slanted inner surface (13) shaped like a ramp, and with the lugs (5) introduced in the keyhole slot fixings (4) when the vertical movement of the electronic control screen (1) is carried out, the head of said lugs (5) slides along the inner surface of the protrusions (12) increasing the pressure against the wall of the electronic control screen (1), ensuring an airtight seal between the electronic control screen (1) and the wall thanks to the perimeter rubber (8).

The depth at which the lugs (5) of the electronic control screen (1) are placed can be regulated so that the space between the electronic control screen (1) and the flat plate (3) can in turn be modified in order to aid the airtight seal between the electronic control screen (1) and the wall.

The invention should not be seen as limited to the particular embodiment described in this document. Those skilled in the art can develop other embodiments in view of the disclosure made herein. In consequence, the scope of the invention is defined by the claims that follow.

## Claims

1. Device for mounting on a wall an electronic control screen (1) equipped with a perimeter relief (6), where the device comprises a box (2) placed in a hole in the wall and a flat plate (3) secured to the box (2), such that the box (2) comprises at least two housings (9) to secure the flat plate (3) using fixing means (10), **characterized in that** the flat plate (3) comprises at least two keyhole slot fixings (4) that have a wide and a narrow part, where at least two lugs (5) of the electronic control screen (1) are introduced, the device comprises at least two protrusions (12) on the inside of said flat plate (3), which correspond to each of the keyhole slot fixings (4), and said protrusions (12) have a slanted inner surface (13) that guides the head of each lug (5) introduced in the keyhole slot fixing (4) in a vertical movement over the inner surface of the protrusion (12) of said lug (5) along the keyhole slot fixing (4).

2. Device for mounting an electronic control screen (1) on a wall, according to claim 1, **characterized in that** the flat plate (3) comprises fittings (7) on the narrow part of the keyhole slot fixings (4) that provide the elasticity needed to carry out a snap connection of the lugs (5) to said keyhole slot fixings (4).

3. Device for mounting an electronic control screen (1) on a wall, according to any previous claim, **characterized in that** the perimeter relief (6) of the electronic control screen (1) provides the space needed to house the flat plate (3) inside the electronic control screen (1) to the device.

4. Device for mounting an electronic control screen (1) on a wall, according to any previous claim, **characterized in that** the electronic control screen (1) comprises a perimeter rubber (8) that creates an airtight seal between the electronic control screen (1) and the wall.

5. Device for mounting an electronic control screen (1) on a wall, according to any previous claim, **characterized in that** the depth at which the lugs (5) are placed can be regulated in relation to the electronic control screen (1) by means of a thread on the electronic control screen (1).

## Patentansprüche

1. Vorrichtung zum Anbringen eines elektronischen Bedienfeldes (1), das mit einer Aussparung (6) am Umfang versehen ist, an einer Wand, wobei die Vorrichtung einen Kasten (2), der in einem Loch in der Wand positioniert wird, sowie eine flache Platte (3) umfasst, die an dem Kasten (2) befestigt ist, und der Kasten (2) wenigstens zwei Aufnahmen (9) zum Befestigen der flachen Platte (3) unter Verwendung von Befestigungsmitteln (10) umfasst, **dadurch gekennzeichnet, dass** die flache Platte (3) wenigstens zwei Schlüsselloch-Befestigungseinrichtungen (4) umfasst, die einen breiten und einen schmalen Teil haben, in die wenigstens zwei Ansätze (5) des elektronischen Bedienfeldes (1) eingeführt werden, die Vorrichtung wenigstens zwei Vorsprünge (12) an der Innenseite der flachen Platte (3) umfasst, die jeder der Schlüsselloch-Befestigungseinrichtungen (4) entsprechen, und die Vorsprünge eine schräge Innenfläche (13) aufweisen, die den Kopf jedes in die Schlüsselloch-Befestigungseinrichtung (4) eingeführten Ansatzes (5) in einer vertikalen Bewegung des Ansatzes (5) über die Innenfläche des Vorsprungs (12) an der Schlüsselloch-Befestigungseinrichtung (4) entlang führt.

2. Vorrichtung zum Anbringen eines elektronischen Bedienfeldes (1) an einer Wand nach Anspruch 1, **dadurch gekennzeichnet, dass** die flache Platte (3) Einpasseinrichtungen (7) an dem schmalen Teil der Schlüsselloch-Befestigungseinrichtungen (4) umfasst, die die Elastizität verleihen, die erforderlich ist, um eine Einrastverbindung der Ansätze (5) mit den Schlüsselloch-Befestigungseinrichtungen (4) herzustellen.

3. Vorrichtung zum Anbringen eines elektronischen Bedienfeldes (1) an einer Wand nach einem der vorangehenden Ansprüche, **dadurch gekennzeichnet, dass** die Aussparung (6) am Umfang des elektronischen Bedienfeldes (1) der Vorrichtung den Raum verleiht, der erforderlich ist, um die flache Platte (3) im Inneren des elektronischen Bedienfeldes (1) aufzunehmen.

4. Vorrichtung zum Anbringen eines elektronischen Bedienfeldes (1) an einer Wand nach einem der vorangehenden Ansprüche, **dadurch gekennzeichnet, dass** das elektronische Bedienfeld (1) einen Dichtungsgummi (8) am Umfang umfasst, der eine luftundurchlässige Dichtung zwischen dem elektronischen Bedienfeld (1) und der Wand schafft.

5. Vorrichtung zum Anbringen eines elektronischen Bedienfeldes (1) an einer Wand nach einem der vorangehenden Ansprüche, **dadurch gekennzeichnet, dass** die Tiefe, in der die Ansätze (5) positioniert werden, in Beziehung zu dem elektronischen Bedienfeld (1) mittels eines Gewindes an dem elektronischen Bedienfeld (1) reguliert werden kann.

## Revendications

1. Dispositif de montage sur une paroi d'un écran à commande électronique (1) équipé d'un relief en périmètre (6), où le dispositif comprend une boite (2) placée dans un trou dans la paroi et une plaque plate (3) fixée à la boite (2), de telle sorte que la boite (2) comprend au moins deux boîtiers (9) pour fixer la plaque plate (3) à l'aide de moyens de fixation (10), **caractérisé en ce que** la plaque plate (3) comprend au moins deux fixations de fentes de trou de serrure (4) qui ont une partie large et une partie étroite, où sont introduits au moins deux tenons (5) de l'écran à commande électronique (1), le dispositif comprend au moins deux saillies (12) sur l'intérieur de ladite plaque plate (3), qui correspondent à chacune des fixations de fente de trou de serrure (4), et lesdites saillies (12) ont une surface interne inclinée (13) qui guide la tête de chaque tenon (5) introduit dans la fixation de fente de trou de serrure (4) dans un mouvement vertical sur la surface interne de la saillie (12) dudit tenon (5) le long de la fixation de fente de trou de serrure (4).

2. Dispositif de montage d'un écran à commande électronique (1) sur une paroi, selon la revendication 1, **caractérisé en ce que** la plaque plate (3) comprend des fixations (7) sur la partie étroite des fixations de fente de trou de serrure (4) destinées à fournir l'élasticité nécessaire pour effectuer une connexion par encliquetage des tenons (5) auxdites fixations de fente de trou de serrure (4).

3. Dispositif de montage d'un écran à commande électronique (1) sur une paroi, selon l'une quelconque des revendications précédentes, **caractérisé en ce que** le relief en périmètre (6) de l'écran à commande électronique (1) fournit l'espace nécessaire pour loger la plaque plate (3) à l'intérieur de l'écran à commande électronique (1) au dispositif.

4. Dispositif de montage d'un écran de commande électronique (1) sur une paroi, selon l'une quelconque des revendications précédentes, **caractérisé en ce que** l'écran à commande électronique (1) comprend un caoutchouc périmétrique (8) qui crée un joint étanche à l'air entre l'écran à commande électronique (1) et la paroi.

5. Dispositif de montage d'un écran à commande électronique (1) sur une paroi, selon l'une quelconque des revendications précédentes, **caractérisé en ce que** la profondeur à laquelle les tenons (5) sont placés peut être réglée par rapport à l'écran à commande électronique (1) au moyen d'un filetage sur l'écran à commande électronique (1).
